# FASCICULE DE BREVET EUROPEEN

(11) **EP 2 648 834 B1**
(45) Date de publication et mention de la délivrance du brevet: **13.04.2016**
(21) Numéro de dépôt: 11794160.9
(22) Date de dépôt: 09.12.2011
(51) Int. Cl.: B01J 2/12, C01B 31/36, C01G 23/04, C01G 23/047

(54) **PROCEDE DE GRANULATION EN VOIE SECHE DE PARTICULES DE TAILLES NANOMETRIQUES**
VERFAHREN ZUR TROCKENEN GRANULIERUNG VON NANOMETRISCHEN PARTIKELN
METHOD FOR THE DRY GRANULATION OF NANOMETRIC PARTICLES

(30) Priorité: 10.12.2010 FR 1060379
(43) Date de publication de la demande: 16.10.2013
(73) Titulaire: Commissariat à l'Énergie Atomique et aux Énergies Alternatives, 75015 Paris (FR)
(72) Inventeur: MASKROT, Hicham, F-91310 Montlhery (FR)
(74) Mandataire: Ilgart, Jean-Christophe
(86) Numéro de dépôt international: PCT/EP2011/072354
(87) Numéro de publication internationale: WO 2012/076698

(56) Documents cités:
- FR-A- 1 340 498
- GB-A- 759 124
- US-A- 3 299 132
- US-A- 5 124 100

## Description

### DOMAINE TECHNIQUE

La présente invention se rapporte aux poudres de particules inorganiques de taille nanométrique et à leur conditionnement sous forme de granules inorganiques de tailles micrométriques ou millimétriques.

Dans la suite de la description, on parlera de nanoparticule pour désigner une particule de taille nanométrique et de nanopoudre pour désigner une poudre constituée de nanoparticules.

### ÉTAT DE LA TECHNIQUE ANTÉRIEURE

En raison de leurs propriétés spécifiques, les nanoparticules connaissent un engouement croissant depuis plusieurs années. En effet, les nanoparticules sont utilisées en tant que matière première ou comme matériau fini dans des industries diverses, telles que l'aéronautique (en tant que nanocomposite), l'automobile (pour la réalisation de pneumatiques, de peintures et de catalyseurs), l'énergie (le nucléaire, le photovoltaïque, la pétrochimie), la cosmétique (en tant qu'agent de structure ou barrière UV), la microélectronique (composant, outil) et l'agroalimentaire.

Cependant, les nanoparticules présentent également de nombreux inconvénients.

L'un de ces inconvénients est que les nanoparticules présentent la propriété d'occuper spontanément l'espace disponible. Elles ont donc tendance à être mises en suspension instantanément dans l'air et peuvent donc facilement être aéroportées vers les voies d'entrée du corps humain (narines, bouche, oreilles...).

De façon antagoniste mais non contradictoire, certaines nanopoudres ont également tendance à s'agglomérer de manière spontanée en raison de leur forte énergie de surface. Or, cet état particulier d'agglomération spontanée confère à la poudre une très mauvaise coulabilité.

D'autre part, les nanopoudres doivent être stockées de manière méticuleuse afin de prévenir les risques d'explosion, toujours très présents en raison de la forte réactivité de surface des nanoparticules.

Pour toutes ces raisons (manipulation, stockage et sécurité), les nanoparticules, une fois produites, doivent être conditionnées.

Il existe deux grandes voies de conditionnement des nanoparticules :
- le conditionnement des nanoparticules en phase liquide, qui consiste à mettre les nanoparticules en suspension dans des solutions de natures diverses (eau, alcool, solvant, polymères), qui sont choisies en fonction des transformations ultérieures que l'on souhaite appliquer aux nanoparticules ; et
- la granulation des nanoparticules, qui consiste à former des granules de tailles micrométriques en agglomérant les nanoparticules entre elles.

Le conditionnement des nanopoudres sous forme de suspension est intéressant, mais il ne convient pas à tous les industriels. En effet, dans certains procédés d'élaboration de matériaux, l'introduction de matières doit se faire en voie sèche.

Par ailleurs, la mise en suspension implique de stocker et de transporter des masses plus importantes de produits.

Enfin, certaines nanopoudres, comme par exemple les poudres de carbures, réagissent dans le temps avec des solvants aqueux ou alcooliques.

On préfère donc en général conditionner les nanopoudres en procédant à leur granulation.

La granulation peut être effectuée en voie sèche ou en voie humide.

Au cours de la granulation en voie sèche, les granules sont obtenus sans utiliser d'humidifiant (liquide ou vapeur).

Les méthodes connues de granulation en voie sèche reposent toutes sur le principe du compactage / concassage des nanoparticules (document [1]) ou, tout au moins, sur le principe d'un pré-compactage des nanoparticules (document [2]). Ces méthodes nécessitent donc l'utilisation de pièces spécialement conçues pour résister aux différentes sollicitations mécaniques lors de l'étape de granulation.

La résistance mécanique des granules est assurée par l'effet conjugué de la diminution de l'écartement entre les particules et de l'augmentation de leur surface de contact provoquées par le compactage ou le pré-compactage.

Au cours de la granulation en voie humide, les granules sont obtenus en rajoutant un humidifiant (liquide ou vapeur) aux particules, qui joue le rôle de liant et permet d'assurer les liens entre les particules.

Il existe plusieurs méthodes de granulation en voie humide.

Les méthodes de granulation par malaxage consistent à mélanger une nanopoudre avec un liquide. Ces méthodes sont très peu utilisées, car les produits intermédiaires doivent ensuite être séchés ; or cette étape est longue et donne le plus souvent des produits ayant une humidité résiduelle trop importante.

En outre, les granulés obtenus sont souvent trop durs et très hétérogènes en taille et en composition.

Enfin, les solvants et les liants organiques utilisés peuvent se retrouver dans la composition des granules. La composition des granules n'est donc pas pure.

Actuellement, les procédés de granulation les plus utilisés sont du type granulation par atomisage-séchage (« spray drying » en anglais) (documents [3] et [4]), du type granulation par trempe rapide (« freeze drying » en anglais) (documents [5] et [6]) et du type granulation en lit fluidisé (« fluidized bed granulator » en anglais) (documents [7] et [8]).

Ces trois procédés de granulation présentent cependant l'inconvénient d'être complexes à mettre en oeuvre.

Cette complexité de mise en oeuvre est, d'une part, liée à la gestion des solvants et des gaz qui doivent être utilisés soit à des températures très basses (azote liquide à 50°K), soit à des températures très élevées (de 100 à 250°C).

D'autre part, ces procédés de granulation comportent tous une étape de mise en suspension des nanoparticules dans un solvant liquide, contenant éventuellement un ou plusieurs liants organiques.

Il en résulte que les granules ainsi obtenus présentent tous une teneur résiduelle en solvant non négligeable.

De plus, du fait de cette teneur résiduelle en solvant, les granules obtenus n'ont pas, dans certains cas, les propriétés mécaniques adéquates : ils sont soit trop friables pour être manipulés, soit trop durs en raison des forces de capillarité induites par la présence de liquide résiduel.

Les documents FR1340498, US3299132 et GB759124 décrivent la granulation de matières pulvérulentes par voie sèche.

Au vu des inconvénients des procédés de granulation de l'art antérieur, l'inventeur s'est fixé comme but de concevoir un procédé de granulation qui soit facile à mettre en oeuvre et qui permettent d'obtenir des granules de taille micrométrique ou millimétrique.

### EXPOSÉ DE L'INVENTION

Ce but est atteint grâce à un procédé de formation de granules inorganiques de tailles micrométriques ou millimétriques par agglomération de particules inorganiques de tailles nanométriques, comprenant l'introduction d'un ensemble de particules inorganiques de tailles nanométriques dans un contenant ayant une paroi intérieure de section circulaire ou sensiblement circulaire et la mise en mouvement de l'ensemble des particules le long de ladite paroi intérieure par mise en rotation du contenant selon un axe de rotation traversant ledit contenant, caractérisé en ce que la mise en mouvement des particules est réalisée à sec et la rotation du contenant est réalisée en continu selon une vitesse constante pendant plusieurs heures consécutives.

Dans le procédé de granulation selon l'invention, la granulation est réalisée à sec, c'est-à-dire que le passage de l'état de particules à l'état de granules se fait sans l'ajout d'un humidificateur (liquide ou vapeur) ou autre liant organique.

Lorsque le contenant est mis en rotation, les particules se déplacent par rapport à la paroi intérieure du contenant et « roulent » sur cette paroi.

La vitesse idéale de rotation du contenant va permettre un roulement satisfaisant des particules sur la paroi intérieure du contenant.

Il est à noter que pour que l'ensemble de particules soit mis en mouvement le long de la paroi intérieure du contenant, il faut bien évidemment, comme le sait l'homme du métier, que le contenant soit mis en rotation, mais il faut en outre, comme dans le cas de la granulation en voie humide, que la vitesse de rotation soit inférieure à une vitesse critique (dont nous parlerons plus loin dans la description) ; cette vitesse critique dépend souvent de la nature des particules introduites dans le contenant (leur composition) et doit donc être déterminée de façon expérimentale.

Au-delà de cette vitesse critique, la force centrifuge exercée sur les particules est trop importante et ne permet plus aux particules de se mouvoir sur la paroi intérieure.

On préférera également éviter de choisir une vitesse dans la gamme de vitesses située juste en deçà de cette vitesse critique (gamme de vitesses que l'homme du métier saura déterminer) ; en effet, pour ces vitesses de rotation, les particules auront effectivement un mouvement le long de la paroi intérieure, mais ne formeront pas un « ensemble » car plusieurs particules ont alors tendance à se détacher de l'ensemble, puis à retomber en provoquant un éparpillement des autres particules et ainsi perturber le mouvement de l'ensemble de particules.

De préférence, la vitesse de rotation du contenant est choisie de sorte que l'ensemble des particules se déplace en s'étirant le long de la paroi intérieure du contenant par rapport à la forme de l'ensemble de particules à l'arrêt.

De préférence, la vitesse de rotation est choisie de sorte que l'ensemble de particules s'étire le long de la paroi intérieure du contenant, mais de sorte que les forces de frottement des particules sur la paroi et sur les autres particules, ainsi que la force de gravité l'emportent sur la force centrifuge s'exerçant sur les particules.

Avantageusement, la vitesse de rotation du contenant est comprise entre 25 et 40% d'une vitesse critique correspondant à la vitesse de rotation à partir de laquelle l'ensemble des particules n'est plus mis en mouvement le long de la paroi intérieure, bien que le contenant soit toujours en rotation. A la vitesse critique, l'ensemble de particules ne glisse plus sur la paroi intérieure du contenant, mais tourne en bloc avec la paroi.

Il est à noter que dans ce qui précède et ce qui suit, le terme « taille », appliqué à des particules, désigne la plus grande dimension de ces particules ; le terme « nanométrique », appliqué à des particules, signifie que la taille est inférieure à 100 nanomètres ; le terme « micrométrique », appliqué à des particules, signifie que la taille est comprise entre 1 micromètre et 1 millimètre (non inclus) ; le terme « millimétrique », appliqué à des particules, signifie que la taille est comprise entre 1 millimètre et 10 millimètres.

Pour déterminer la taille des particules élémentaires (poudre brute), on peut par exemple procéder de la manière suivante. Tout d'abord, on mesure la surface spécifique des particules (ou des granules) par la méthode BET (méthode de Brunauer, Emmet et Telier) qui fournit le rapport surface/poids (unité m²/g⁻¹) des particules. Puis, on mesure la masse volumique des particules de poudre par la méthode de pycnométrie à l'hélium, qui fournit le poids des particules par unité de volume. Le pycnomètre à hélium permet de déterminer la masse volumique d'un matériau massif, divisé ou poreux à partir de la mesure très précise du volume d'un échantillon de masse connue. Enfin, on calcule le diamètre moyen des particules en considérant que chaque particule est sphérique.

La taille des granules est, quant à elle, déterminée préférentiellement à partir des observations en microscopie électronique à balayage (MEB).

De préférence, l'axe de rotation du contenant est situé au centre de la section circulaire ou sensiblement circulaire de la paroi intérieure.

En ce qui concerne le choix du contenant, n'importe quel contenant possédant une paroi intérieure de section circulaire ou sensiblement circulaire dont la paroi intérieure est en un matériau résistant à l'abrasion des particules peut convenir.

Avantageusement, le contenant peut ainsi être en métal, en verre, en céramique ou en polymère.

Avantageusement, le contenant peut être tout contenant dont le volume intérieur est de forme sphérique ou cylindrique.

Le contenant peut être un ballon en verre du type de ceux couramment utilisés dans les laboratoires de chimie (par exemple un ballon de la marque Quickfit™) ou un cylindre, par exemple un bidon cylindrique.

De préférence, le contenant est un contenant fermé, empêchant ainsi toute sortie intempestive des particules hors du contenant. Préférentiellement, le contenant est également étanche.

Selon des variantes de réalisation, l'axe de rotation du contenant peut être incliné par rapport à l'horizontal. Il peut ainsi être incliné d'un angle supérieur à 0 et inférieur ou égal à 90° par rapport à l'horizontal ; de préférence, l'angle d'inclinaison est inférieur ou égal à 80°.

On précise que la mise en rotation du contenant peut se faire par tout moyen technique connu pouvant mettre un objet en rotation selon un axe de rotation ; il peut par exemple s'agir d'un mélangeur à rouleaux sur lequel sera disposé le contenant (le contenant ayant alors une forme cylindrique ou sphérique), d'un rotor fixé au container...

Un des avantages du procédé de granulation selon l'invention est qu'il peut être mis en oeuvre dans les mêmes dispositifs que ceux utilisés habituellement pour la granulation en voie humide, comme les dispositifs à tambour rotatif (tambour granulateur) ou encore les dispositifs à plateau tournant (assiette tournante).

Dans ce cas, on prendra soin, de préférence, d'obturer les entrées et sorties du dispositif, une fois les particules introduites à l'intérieur. Par exemple, pour l'assiette tournante, on pourra disposer un couvercle au dessus de l'assiette afin que les particules ne puissent s'échapper.

De même, dans le cas d'une assiette tournante constituée d'un plateau plan muni d'un rebord, le plateau de l'assiette sera incliné par rapport à la verticale afin que l'ensemble des particules puisse être mis en mouvement sur le rebord, le rebord formant ici la paroi intérieure de section circulaire ou sensiblement circulaire.

Au contraire, si le fond de l'assiette a une forme sphérique, il ne sera alors pas nécessaire d'incliner l'assiette.

Par ailleurs, comme dans les procédés de granulation en voie humide, on évitera de trop remplir le contenant de particules. De préférence, le volume intérieur du contenant est au moins cinq fois supérieur au volume de l'ensemble de particules introduit dans le contenant.

Avantageusement, les particules introduites dans le contenant sont en un matériau inorganique.

Avantageusement, le matériau inorganique est un oxyde, un métal ou un carbure. Le matériau inorganique peut être un oxyde de titane, un oxyde de silicium, un oxyde d'aluminium, un carbure de silicium ou un carbure de titane.

Le procédé de granulation selon l'invention permet d'obtenir des granules micrométrique ou millimétrique particulièrement intéressante.

Avantageusement, le matériau inorganique est un oxyde, un métal ou un carbure.

Avantageusement, le matériau inorganique est un oxyde de titane, un oxyde de silicium, un oxyde d'aluminium, le carbure de titane ou le carbure de silicium (SiC). De préférence, le matériau inorganique est choisi parmi le dioxyde de titane (TiO₂), le dioxyde de silicium (SiO₂) ou l'alumine (Al₂O₃).

Avantageusement, le granule est sphérique ou sensiblement sphérique et comporte des facettes de tailles nanométriques.

Avantageusement, le granule a une masse volumique apparente au moins deux fois supérieure à la masse volumique apparente de l'une quelconque des particules introduites dans le contenant. La poudre granulée obtenue présente une masse volumique apparente au moins deux fois supérieure à celle de poudre initiale non granulée, de préférence nettement supérieure.

Le procédé selon l'invention permet d'obtenir une granulation de nanopoudres inorganiques (oxyde, métal et carbure) par une méthode en voie sèche, sans ajout de liant, de solvant (vapeur ou liquide) et sans compaction.

En outre, aucune modification extérieure de la température ou de la pression ambiante au sein du contenant n'est nécessaire.

L'introduction de gaz neutre ou réactif au sein du contenant n'est également pas nécessaire.

Enfin, aucun mobile d'agitation tel que ceux rencontrés dans les mélangeurs-granulateurs à fort taux de cisaillement (billes ...) n'est nécessaire.

Le procédé de granulation selon l'invention permet d'obtenir des granules plus ou moins sphériques, comportant des facettes nanostructurées.

Les caractéristiques des granules obtenus à l'issue du procédé selon l'invention vont dépendre essentiellement des paramètres de granulation appliquées, à savoir les caractéristiques physicochimiques et structurales de la nanopoudre initiale, du rapport « volume de la poudre / volume intérieur du récipient », de la vitesse de rotation du contenant, du volume intérieur du contenant, du type de matériau qui compose le contenant, du temps de rotation, de l'angle d'inclinaison de l'axe de rotation et de la technique utilisée pour la mise en rotation du contenant.

Selon les paramètres de granulation appliquées, les granules ont une dispersion en taille plus ou moins large allant de quelques dizaines de micromètres à plusieurs millimètres (jusqu'à 7 mm).

La masse volumique apparente de la nanopoudre granulée est ajustable et il est possible de l'augmenter jusqu'à 15 fois la masse volumique apparente initiale.

La nanopoudre granulée obtenue conserve sa surface spécifique et les granules se dispersent facilement dans un solvant sous sonication.

La nanopoudre granulée présente une coulabilité qui permet son tamisage sans colmatage du tamis.

Enfin, le taux d'humidité n'est pas plus élevé que le taux d'humidité initial de la nanopoudre brute.

La simplicité du procédé de granulation selon l'invention permet d'envisager une industrialisation et une mise en oeuvre rapide et à faible coût de ce procédé par rapport aux autres méthodes utilisées classiquement dans le domaine des nanopoudres.

Des essais de mise en forme de matériaux massifs à partir de ces granules sont en cours de réalisation. Les résultats préliminaires mettent en évidence un gain significatif en termes de facilité de manipulation, de diminution du volume de stockage et de simplification du protocole de mise en forme des matériaux.

Comme nous venons de le voir, la mise en oeuvre du procédé de granulation selon l'invention est très simple, mais il serait trompeur de penser que ce procédé était évident pour un homme du métier.

En effet, comme nous l'avons précisé précédemment, les nanopoudres ont naturellement tendance à s'agglomérer. C'est la raison pour laquelle, dans le cadre de la présente invention, l'inventeur fait la distinction entre un état d'agglomération spontané des nanopoudres (ou granulation spontanée) et celui d'un état de granulation induite. Il est important de faire cette distinction car un granule est, par définition, synonyme d'agglomérats. Or, comme précisé plus haut, les nanopoudres se présentent naturellement sous forme d'agglomérats. Les granules ou agglomérats résultant d'une granulation spontanée restent cependant pulvérulents et volatiles. Dans le cadre de l'invention, les granules obtenus par le procédé de granulation selon l'invention sont des objets de taille micrométrique ou millimétrique, dont les contours et les formes sont préférentiellement sphériques.

Bien que les nanopoudres aient naturellement tendance à s'agglomérer, elles ont en même temps tendance à occuper tout l'espace disponible. En effet, il est connu que les nanopoudres ont tendance à se comporter comme un gaz vis à vis de la température. En d'autres termes, l'agitation thermique tend à ce que les grains de la nanopoudre occupent l'ensemble d'un volume donné.

Ainsi, il n'était pas évident de penser que la mise en rotation d'une nanopoudre dans un contenant puisse permettre de densifier les pré-agglomérats formées spontanément et encore moins d'augmenter leurs tailles afin de former des granules ayant une taille de plusieurs micromètres.

En effet, les nanopoudres ont en règle générale une masse volumique apparente très faible ; pour la plupart des nanopoudres, cette masse volumique apparente est inférieure à 100 g/l (soit 0,1 g/cm³). A titre d'exemple, l'oxyde de titane TiO₂ de référence P25 fabriqué par la société Degussa, qui est une nanopoudre de référence très répandue dans le monde des nanosciences, a une masse volumique apparente (ou « bulk density » en anglais) de 0,09 g/cm³.

En plus d'une faible masse volumique apparente, les forces d'attractions entre les particules de nanopoudre sont telles que la mise en mouvement d'un amas de poudre (c'est-à-dire un ensemble de particules) s'avère difficile.

D'autre part, la faible masse des particules élémentaires ne leur confère qu'une faible énergie cinétique. Or, l'énergie cinétique est nécessaire pour rapprocher les particules et faire en sorte qu'il y ait suffisamment de collisions efficaces entre elles pour qu'elles s'agglomèrent.

En résumé, bien que les particules aient tendance à s'agglomérer spontanément, il y a bien d'autres phénomènes physiques qui sont mis en jeu, comme expliqué ci-avant. C'est la raison pour laquelle l'homme du métier n'a jamais pensé qu'une simple mise en mouvement des particules par mise en rotation d'un lit de nanopoudres puisse permettre leur granulation.

Au contraire, la communauté des nanosciences a longtemps cherché à mettre au point des méthodes plus ou moins complexes de granulation des nanopoudres, sans jamais envisager la solution décrite ici.

L'invention sera mieux comprise à la lumière du complément de description qui suit, qui se rapporte à des exemples de réalisation de granules selon l'invention et la comparaison de ces granules avec des granules équivalents disponibles dans le commerce.

Bien entendu, ces exemples ne sont donnés qu'à titre d'illustrations de l'objet de l'invention et ne constituent en aucun cas une limitation de cet objet.

### BRÈVE DESCRIPTION DES DESSINS

La figure 1 représente de manière schématique un premier exemple de dispositif qu'il est possible d'utiliser pour réaliser la granulation selon l'invention.
Les figures 2a à 2c sont des photographies obtenues à l'aide d'un appareil photographique classique qui montrent respectivement un tas de 100 mg de la poudre brute (figure 2a) utilisée dans un premier exemple de réalisation du procédé selon l'invention et les granules obtenus au bout de 6 heures de rotation (figure 2b et 2c) dans le dispositif de granulation illustré dans la figure 1.
Les figures 3a et 3b représentent des clichés obtenus par microscopie à balayage électronique (MEB) des granules obtenus au bout de 6h selon un premier exemple de réalisation.
La figure 4 représente de manière schématique un second exemple de dispositif qu'il est possible d'utiliser pour réaliser la granulation selon l'invention.
Les figures 5a à 5c représentent des clichés des granules observés en microscopie électronique à balayage pour différents temps de granulation selon un second exemple de réalisation du procédé selon l'invention.
Les figures 6a et 6b représentent des clichés d'un granule obtenu au bout de 4 heures selon le second exemple de réalisation du procédé selon l'invention et observés en microscopie électronique à balayage selon deux grossissements différents.
Les figures 7a à 7c représentent des clichés observés en microscopie électronique à balayage de la poudre brute et des granules obtenus selon le second exemple de réalisation par le procédé selon l'invention au bout de 22 heures et 100 heures de granulation, respectivement.
Les figures 8a à 8c représentent des clichés observés en microscopie électronique à balayage des granules obtenus selon le second exemple de réalisation par le procédé selon l'invention au bout de 22 heures, 100 heures et 120 heures, respectivement.

### EXPOSÉ DÉTAILLÉ DE MODES DE RÉALISATION PARTICULIERS

L'extrême pauvreté de la littérature sur la granulation des nanopoudres inorganiques témoigne de la difficulté à les conditionner sous forme de granules.

Rares sont les exemples de granulation de nanopoudres d'oxydes (TiO₂, SiO₂ et Al₂O₃) et aucune étude, à notre connaissance, ne fait état d'une granulation réussie de carbure à partir d'une nanopoudre du type carbure de silicium (hormis par compaction-concassage).

Afin de mieux situer cette invention dans son contexte, quelques exemples de granulation vont à présent être décrits et comparés aux très rares granules de nanopoudres rencontrés dans la littérature.

Les poudres choisies pour réaliser cette comparaison sont respectivement la poudre de nanoparticules d'oxyde de titane P25 fournie par Degussa et la poudre de nanoparticules de carbure de silicium synthétisé par une méthode physique (pyrolyse laser).

Dans le cas du carbure de silicium, aucune comparaison ne pourra être effectuée en raison de l'absence d'exemples de granules de taille micrométrique ou millimétrique dans l'état de l'art.

### A. Granulation de l'oxyde de titane P25

La poudre d'oxyde de titane P25 est une poudre constituée de particules d'oxyde de titane de taille nanométrique, ces particules ayant une surface spécifique de 50 m²/g (+/- 15), un diamètre moyen de 21 nm et une masse volumique apparente comprise entre 0,09 et 0,11 g/cm³.

Dans l'art antérieur, nous avons trouvé deux études illustrant deux techniques différentes de granulation de cette poudre d'oxyde de titane P25, à savoir une granulation par atomisation-séchage (« spray drying » en anglais) dans l'étude de Faure et al. (document **[4])** et dans l'étude de Moritz et al. (document **[6])** et une granulation par effet de trempe rapide (« spray freezing » en anglais) dans l'étude de Moritz et al. (document **[6]).**

Pour granuler cette nanopoudre, Faure et al. commencent par préparer une suspension de nanopoudre de Ti0₂ dans de l'eau en utilisant une quantité importante de dispersant (par exemple le Dispex N40). Les proportions utilisées sont de 240 g de dispersant (masse sèche) pour 10 kg de poudre de Ti0₂ dans 18 litres d'eau.

Une étape de tamisage de la suspension ainsi obtenue est nécessaire afin d'éliminer les gros agglomérats qui pourraient boucher la buse d'atomisation.

La suspension tamisée est ensuite continuellement agitée jusqu'à son introduction dans un dispositif atomiseur-sécheur.

Dans ces conditions, Faure et al. obtiennent des granules sphériques, ayant une large dispersion en tailles (de 11 à 87 µm) et un diamètre moyen (D50) de 33 µm.

Le taux d'humidité résiduel dans ces granules est de 2,5%.

La masse volumique de la nanopoudre après granulation est, quant à elle, passée de 0,11 g/cm³ à 0,69 g/cm³.

Les granules obtenus se redispersent aisément en suspension par ultrasonication.

La quasi-totalité du dispersant organique (Dispex 40) se retrouve dans les granules. On peut donc en conclure que le dispersant sert également de liant organique, ce qui veut dire, a contrario, que sans liant, la granulation n'aurait probablement pas eu lieu.

Moritz et al. ont à la fois travaillé sur la granulation par trempe rapide et par atomisation-séchage.

Ils travaillent avec des suspensions ayant des charges massiques en poudres qui sont différentes (de 25 à 45% en masse).

Dans certains cas, ils ajoutent 4% en masse de dispersant aux suspensions.

Avec les deux techniques, Moritz et al. obtiennent des granules sphériques plus ou moins compacts.

En utilisant la méthode de granulation par trempe rapide et sans utiliser de dispersant, ils obtiennent une nanopoudre granulée ayant une masse volumique allant de 0,18 à 0,3 g/cm³.

L'ajout d'un dispersant (qui joue également le rôle de liant en phase sèche) permet d'augmenter cette masse volumique jusqu'à 0,44 g/cm³.

Les nanopoudres granulées obtenues par atomisage-séchage (avec liant) ont une masse volumique plus importante que celles obtenues par la méthode de granulation par trempe rapide : elle est de 0,75 g/cm³.

Les granules sphériques obtenus par atomisage-séchage semblent être plus compacts et avoir une surface plus lisse que ceux obtenus par trempe rapide. D'après Moritz et al., cela s'explique par le fait que l'atomisation-séchage favorise l'apparition de forces de capillarité lors de l'évaporation du liquide. Ces forces augmenteraient, selon eux, la cohésion des granules. Dans le cas de la trempe rapide, ces forces ne sont pas présentes et seules les forces physiques faibles du type London/van-der-Waals permettent la cohésion des granules.

Pour démontrer l'efficacité du procédé selon l'invention, nous avons utilisé la même poudre commerciale, la poudre d'oxyde de titane P25.

### Exemple A1

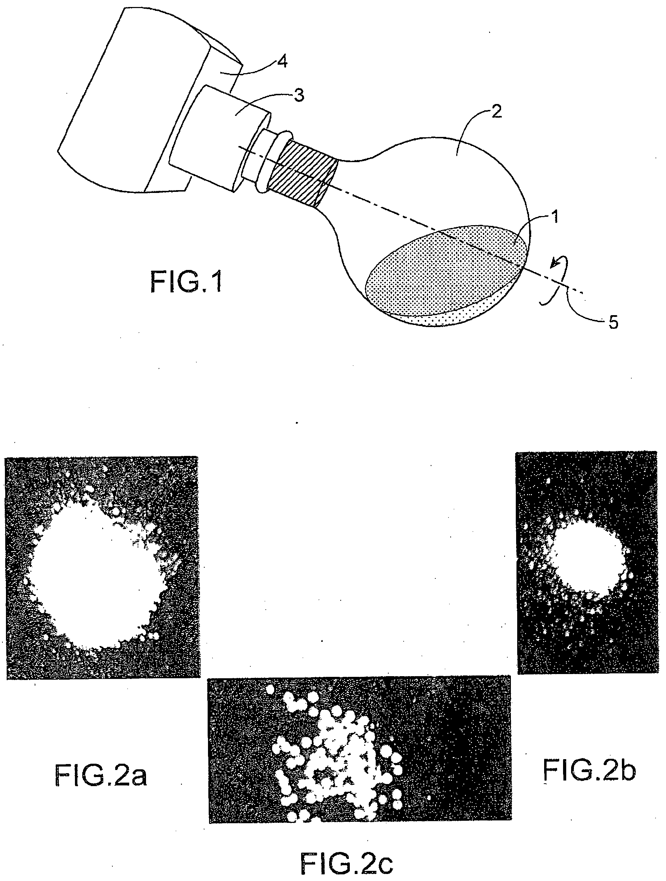

Le dispositif utilisé pour réaliser la granulation selon l'invention dans cet exemple de réalisation est représenté de manière schématique dans la figure 1.

Ce dispositif est composé d'un stator 4 (partie fixe (statique) d'un moteur électrique) et d'un rotor 3 (partie mobile du moteur électrique). Le contenant 2 est ici un ballon en verre. Le ballon est fixé à l'extrémité du rotor 3 et va tourner selon un axe de rotation 5.

La quantité de nanopoudre d'oxyde de titane P25 qui est introduite dans le ballon de verre est calculée de telle sorte que la nanopoudre occupe environ 25% du volume intérieur du ballon. Le rotor permet de mettre en rotation le ballon selon un axe de rotation.

L'axe de rotation du rotor peut éventuellement être incliné d'un angle allant jusqu'à 90° (inclus) par rapport à l'horizontal (dans la figure 1, le ballon se trouverait alors totalement orienté vers le bas).

Dans notre exemple de réalisation, le ballon de verre utilisé a un volume intérieur de 2 litres, un diamètre intérieur de 10 cm environ, et a vitesse de rotation en mode d'utilisation est de 50 tours par minute.

La masse de poudre introduite dans le ballon est de 50 g.

La durée de rotation du ballon est fixée à 6 heures.

Les parois du ballon mettent en mouvement le lit de nanopoudres.

Les figures 2a à 2c sont trois photographies montrant respectivement la poudre brute (figure 2a) et les granules obtenus au bout de 6 heures de rotation dans le dispositif de granulation décrit ci-dessus (figures 2b et 2c).

Dans le cas de la poudre granulée, il est possible de distinguer à l'oeil nu deux populations de granules : les « gros » granules (figure 2c), qui représentent environ 10 % en masse de la totalité de la poudre granulée obtenue, et des « petits » granules (figure 2b), qui représentent le reste de la nanopoudre obtenue, soit environ 90% en masse de la poudre granulée obtenue.

Une séparation au tamis des deux populations est possible.

Une augmentation du temps de granulation (c'est-à-dire du temps de rotation du ballon de verre) permet de diminuer le nombre de « gros » granules.

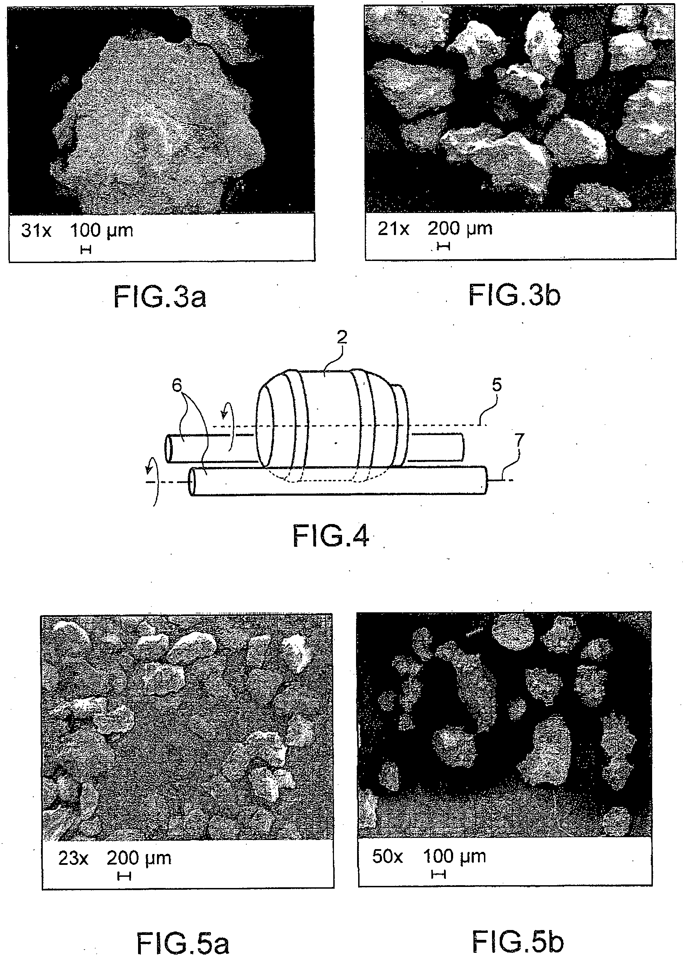

Les figures 3a et 3b représentent des clichés des granules obtenus au out de 6h et observés en microscopie électronique à balayage (MEB).

Le cliché présenté dans la figure 3a est un cliché d'un gros granule. Il montre un granule de forme approximativement sphérique d'environ 2,7 mm de diamètre, qui a une surface irrégulière et qui comporte une fissure au centre.

Cette fissure résulte du mécanisme de formation du granule. En effet, en début de granulation (première heure), on observe la formation de très gros granules de tailles très différentes (dont le diamètre peut aller jusqu'à 1 cm), puis tout au long du processus les granules se brisent sous l'effet des chocs répétés. Ces mêmes chocs permettent la densification des granules.

Le cliché présenté dans la figure 3b est un cliché des petits granules (90% en masse de la poudre granulée). On constate que la distribution en taille des petits granules s'étend de 600 µm à 1,2 mm. De plus, alors que les « gros » granules ont plutôt une forme sphérique, les « petits » granules ont une forme irrégulière.

### Exemple A2

Pour ce mode de réalisation, nous avons utilisé un dispositif de granulation différent de l'exemple précédent ; il est représenté dans la figure 4.

Comme on peut le constater, nous avons utilisé un simple bidon étanche de forme cylindrique comme contenant 2, en l'occurrence un bidon étanche en polyéthylène haute densité de la marque Curtec™.

Son volume est de 5 litres et la masse de nanopoudre qui y est introduite est de 200 g (non représentée).

Le bidon est posé sur deux rouleaux caoutchoutés 6. L'un des rouleaux est moteur et tourne sur lui-même selon un axe de rotation 7, tandis que l'autre tourne librement. Le rouleau moteur va entrainer en rotation le bidon, qui va tourner en rotation autour de l'axe de rotation 5, et le bidon va à son tour entrainé en rotation l'autre rouleau 6.

La vitesse de rotation du rouleau moteur est réglée à 60 tours par minute.

Au cours d'une première expérience, nous avons réalisé l'expérience pendant 12 heures en arrêtant la rotation du bidon toutes les heures pour observer l'état de la poudre. Nous avons ainsi constaté qu'un arrêt toutes les heures de la rotation du bidon, suivi de l'ouverture de ce dernier pour observer la poudre, avait un effet négatif sur la granulation, même après 12 cycles de 1 heures. En effet, bien que la masse volumique de la poudre ait été augmentée d'un facteur 2 au bout de 12 heures par rapport à la poudre initiale, il n'est toutefois pas possible d'observer des granules au sens de l'invention. La poudre obtenue est à la fois très cohésive (très mauvaise coulabilité) et pulvérulente, état similaire à la poudre brute.

Nous avons réalisé quatre expériences identiques, en modifiant uniquement le temps de granulation. Les temps de granulation ont été respectivement fixés à 4, 24, 48 et 72 heures.

Si la mise en rotation n'est pas interrompue, on obtient au bout de 4h un état de granulation similaire à celui observé dans le premier mode de granulation sans les gros granules.

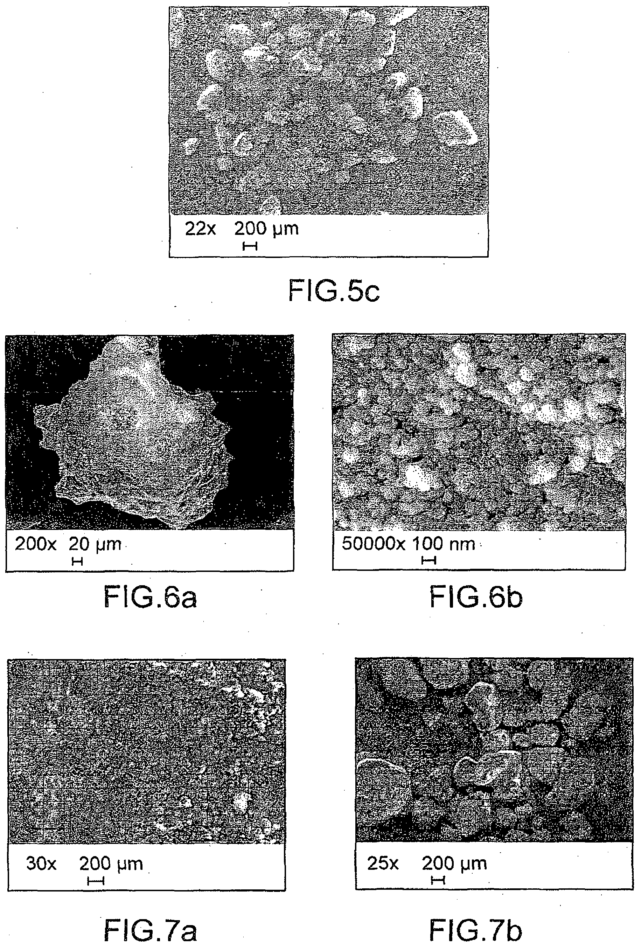

Les figures 5a à 5c sont des clichés des granules observés en microscopie électronique à balayage (MEB) à faible grossissement obtenus au bout de différents temps de granulation, à savoir au bout de 24 heures (figure 5a ; grossissement de 23 fois), 48 heures (figure 5b ; grossissement de 50 fois) et 72 heures (figure 5c ; grossissement de 22 fois).

Tout d'abord, on constate que la forme des granules est similaire à celle obtenue avec le premier mode de réalisation (celui décrit dans l'exemple A1).

Néanmoins, on observe que les granules ont une surface comportant plus d'aspérités et des arrêtes plus prononcées.

On observe également une réduction de la taille des granules et un affinement de la distribution en taille des granules en fonction du temps de rotation. En effet, la distribution en taille des granules s'étend de 300 µm à 1 mm, de 100 µm à 700 µm et de 200 µm à 500 µm pour des temps de granulation de 24, 48 et 72 heures, respectivement.

Nous avons pris des clichés MEB à deux grossissements différents (grossissement de 200 fois (figure 6a) et grossissement de 50000 fois (figure 6b)) d'un granule obtenu selon le procédé de l'invention au bout de 4 heures.

Au bout de 4 heures, nous obtenons des granules dispersés et non agglomérés, ayant une taille de plusieurs micromètres, voire de plusieurs centaines de micromètres. Dans la figure 6a est présenté un cliché MEB d'un de ces granules de taille micrométrique.

Si l'on regarde de plus près, nous observons que ce granule est formé de grains agglomérés de taille nanométrique.

Ces deux clichés MEB montrent ainsi l'existence d'une organisation à deux niveaux au sein des granules obtenus selon l'invention.

Le tableau ci-dessous regroupe les masses volumiques apparentes obtenues après différentes durées de granulation à vitesse constante, c'est-à-dire au temps 0 et après un temps de granulation respectivement de 4, 30 et 72 heures.

| | | | | |
|---|---|---|---|---|
| Temps de granulation (heure) | 0 | 4 | 30 | 72 |
| Masse volumique apparente (g/cm³) | 0,09 | 0,4 | 0, 6 | 0,75 |

On constate que la masse volumique augmente lorsque la durée de granulation augmente.

La valeur de 0,75 g/cm³ obtenue au bout de 72 heures est équivalente à celle obtenue par Moritz et al. lors de la granulation par atomisage-séchage de la nanopoudre de TiO₂ P25 avec liant.

### B. Granulation de particules de carbure de silicium SiC de tailles nanométriques

L'art antérieur ne fait pas état d'une granulation de nanopoudres de carbure, a fortiori de carbure de silicium. Pour cette raison, il n'a pas été possible de comparer les résultats obtenus avec le procédé selon l'invention avec des résultats de l'art antérieur.

Le dispositif utilisé pour la granulation du SiC est similaire à celui utilisé dans l'exemple A2 décrit ci-dessus.

Nous avons donc utilisé un bidon étanche en polyéthylène haute densité de la marque Curtec™, ayant un volume de 5 litres et nous y avons introduit 200 g de poudre de carbure de silicium de taille nanométrique synthétisée par pyrolyse laser.

La surface spécifique de la poudre est de 61 m²/g et la masse volumique apparente est de 45 g/l (c'est-à-dire 0,045 g/cm³).

Le bidon est posé sur deux rouleaux caoutchoutés, dont l'un est moteur et fait tourner le bidon, et l'autre tourne librement. La vitesse de rotation du rouleau moteur est réglée à 60 tours par minute.

Les temps de granulation ont été fixés à 6, 22, 72, 100, 120 et 132 heures.

Tout comme pour l'oxyde de titane, nous avons constaté que l'arrêt, à chaque heure, de la mise en rotation et l'ouverture du bidon pour observer la poudre, avaient un effet négatif sur la granulation, même au bout de 12h.

En effet, bien que la masse volumique de la poudre ait été augmentée d'un facteur 2, il n'a pas été possible d'observer des granules au sens de l'invention. La poudre obtenue était toujours à la fois très cohésive (très mauvaise coulabilité) et pulvérulente, état similaire à la poudre brute.

Au contraire, si la mise en rotation n'est pas interrompue, on obtient un état de granulation satisfaisant au bout de 4h.

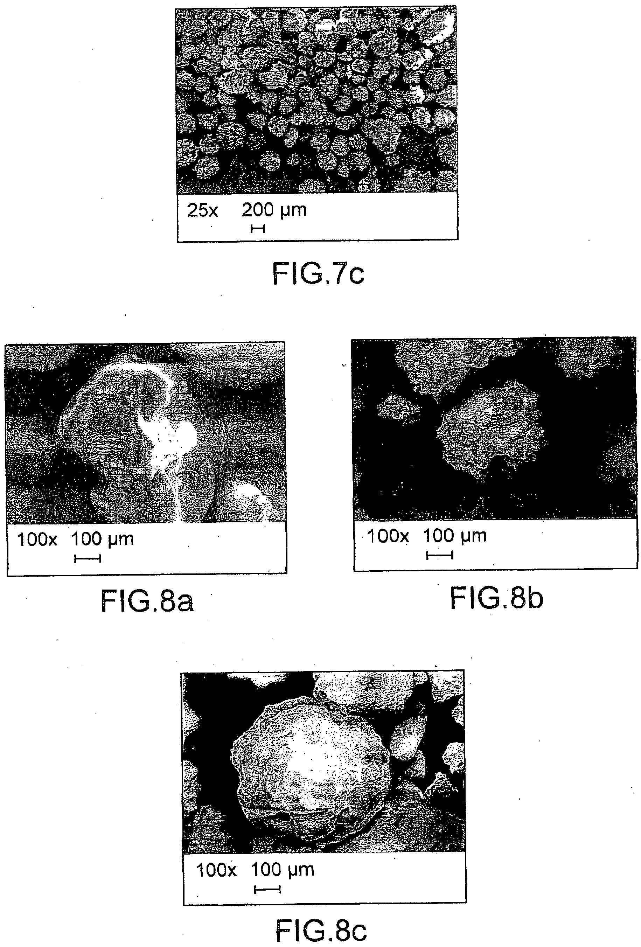

Les figures 7a à 7c représentent respectivement des clichés MEB de la poudre brute (figure 7a ; grossissement de 30 fois) et des granules obtenus par le procédé selon l'invention au bout de 22 heures (figure 7b ; grossissement de 25 fois) et 100 heures de granulation (figure 7c ; grossissement de 25 fois).

A partir du cliché présenté dans la figure 7a, on observe que la poudre brute est dans un état d'agglomération typique des nanopoudres, à savoir une distribution en taille des agglomérats très large (typiquement allant de quelques centaines de nanomètres à 300 micromètres), une forme non définie des agglomérats, une présence importante d'agglomérats de tailles inférieures à 1 micromètre), une masse volumique très faible (inférieure à 0,045 g/cm³), etc.

Concernant les poudres granulées obtenues par le procédé selon l'invention au bout de 22 heures et 100 heures de granulation, on observe une réduction de la taille des granules, ainsi qu'un affinement de la distribution en taille des granules au fur et à mesure de l'augmentation du temps de rotation.

En effet, la distribution en taille des granules s'étend de 200 µm à 1,1 mm et de 100 µm à 700 µm, pour des temps de granulation respectivement de 22 heures et 100 heures.

Par ailleurs, l'observation des clichés MEB des granules obtenus selon le procédé de l'invention au bout de 22 heures (figure 8a ; grossissement de 100 fois), 100 heures (figure 8b ; grossissement de 100 fois) et 120 heures (figure 8c ; grossissement de 100 fois) de granulation mettent en évidence une sphéroïdisation des granules avec l'augmentation de la durée de granulation.

Le tableau ci-dessous regroupe les masses volumiques apparentes obtenues après différentes durée de granulation à vitesse constante.

| | | | | | | | |
|---|---|---|---|---|---|---|---|
| Temps de granulation (heure) | 0 | 6 | 22 | 72 | 100 | 120 | 132 |
| Masse volumique apparente (g/cm³) | 0,045 | 0,27 | 0,36 | 0,50 | 0,51 | 0,55 | 0,53 |

On constate que la masse volumique apparente des granules augmente lorsque la durée de granulation augmente, pour atteindre un optimum à 120 heures. Une légère baisse de la masse volumique est constatée pour une durée de 132 heures.

Des essais de tamisage ont montré que la poudre de granules présente une bonne coulabilité. En effet, avec un tamis ayant des ouvertures de 800 µm, aucun colmatage n'a été observé.

Concernant la surface spécifique des poudres granulées, des mesures avant et après granulation ont montré qu'il n'y avait pas d'évolution significative.

Avant de procéder aux mesures, les échantillons de poudres sont dégazés pendant 2 heures à 250°C sous balayage d'azote.

La granulation a été menée avec un dispositif similaire à celui de l'exemple Al.

Pour chaque échantillon, on mesure à la fois la surface spécifique et le taux d'humidité apparent, qui correspond à la perte de masse de la poudre après dégazage à 250°C.

Les résultats sont regroupés dans le tableau ci-dessous.

| | | | |
|---|---|---|---|
| Temps de granulation (heure) | 0 | 6 | 22 |
| Surface spécifique (m²/g) | 60 (+/-3) | 61 (+/-3) | 63 (+/-3) |
| Taux d'humidité apparent | 2 | 0,8 | 0,5 |

On constate que la perte de masse de la poudre diminue quand la durée de granulation augmente. Ce dernier résultat est néanmoins critiquable, car en raison de l'augmentation de la masse volumique apparente, la masse à dégazer augmente si on reste à volume, temps et température constants.

### BIBLIOGRAPHIE

[1] US 5,124,100
[2] Katzer et al. "Residence time distribution in granulation drums on the example of industrial carbon black", Chem. Eng. Technol. (2004), 27, N°5
[3] Saederup et al. "Spray drying for processing of nanomaterials", Journal of Physics: Conference Series 170 (2009), International Conference on Safe production and use of nanomaterials
[4] Faure et al. "Spray, drying of TiO2 nanoparticles into redispersible granules", Powder Technology (2010)
[5] Nyberg et al. "Granulation of ceramic powders for pressing by spray freezing and freezing-drying", Euro-Ceramics II (1993), vol. 1, p 447-451
[6] Moritz et al. "Preparation of super soft granules from nanosized ceramic powders by spray freezing", Journal of 'Nanoparticle Research 4 (2002), p 439 - 448
[7] Watano et al. "Microgranulation of fine powders by a novel rotating fluidized bed granulator", Powder Technology 131 (2003), p 250-255
[8] Chen et al. "Granulation of cohesive Geldart group C powders in a Mini-Glatt fluidized bed by pre-coating with nanoparticles", Powder Technology 191 (2009), p 206-217

## Revendications

1. Procédé de formation de granules inorganiques de tailles micrométriques ou millimétriques par agglomération de particules inorganiques de tailles nanométriques, comprenant l'introduction d'un ensemble de particules (1) inorganiques de tailles nanométriques dans un contenant (2) ayant une paroi intérieure de section circulaire ou sensiblement circulaire et la mise en mouvement de l'ensemble des particules le long de ladite paroi intérieure par mise en rotation du contenant selon un axe de rotation (5) traversant ledit contenant (2), **caractérisé en ce que** la mise en mouvement des particules est réalisée à sec et la rotation du contenant est réalisée en continu selon une vitesse constante pendant plusieurs heures consécutives.

2. Procédé de formation de granules selon la revendication 1, dans lequel l'axe de rotation (5) du contenant (2) est situé au centre de la section circulaire ou sensiblement circulaire de la paroi intérieure.

3. Procédé de formation de granules selon la revendication 1, dans lequel la vitesse de rotation du contenant est comprise entre 25 et 40% d'une vitesse critique correspondant à la vitesse de rotation à partir de laquelle l'ensemble des particules n'est plus mis en mouvement le long de la paroi intérieure, bien que le contenant soit toujours en rotation.

4. Procédé de formation de granules selon la revendication 1, dans lequel le contenant est un contenant fermé.

5. Procédé de formation de granules selon la revendication 1, dans lequel l'axe de rotation (5) du contenant est incliné par rapport à l'horizontal.

6. Procédé de formation de granules selon la revendication 1, dans lequel le volume intérieur du contenant est au moins cinq fois supérieur au volume de l'ensemble de particules introduit dans le contenant.

7. Procédé de .formation de granules selon la revendication 1, dans lequel le volume intérieur du contenant est de forme sphérique ou cylindrique.

8. Procédé de formation de granules selon la revendication 1, dans lequel les particules introduites dans le contenant sont en un matériau inorganique.

9. Procédé de formation de granules selon la revendication 8, dans lequel le matériau inorganique est un oxyde, un métal ou un carbure.

10. Procédé de formation de granules selon la revendication 9, dans lequel le matériau inorganique est un oxyde de titane, un oxyde de silicium, un oxydé d'aluminium, un carbure de silicium ou un carbure de titane.

11. Procédé de formation de granules selon la revendication 10, dans lequel le matériau inorganique est choisi parmi le dioxyde de titane (TiO₂), le dioxyde de silicium (SiO₂), l'alumine (Al₂O₃).

## Patentansprüche

1. Verfahren zur Bildung von anorganischen Kügelchen mit Mikrometer- oder Millimeter-Größen durch Agglomeration von anorganischen Partikeln mit Nanometer-Größen, umfassend das Einbringen einer Gruppe von anorganischen Partikeln (1) mit Nanometer-Größen in einen Behälter (2) mit einer Innenwand mit kreisförmigem oder im Wesentlichen kreisförmigem Querschnitt sowie das in Bewegung Versetzen der Gruppe von Partikeln entlang der Innenwand durch in Drehung Versetzen des Behälters entlang einer Drehachse (5), die den Behälter (2) durchsetzt, **dadurch gekennzeichnet, dass** das in Bewegung Versetzen der Partikel trocken erfolgt und die Drehung des Behälters kontinuierlich mit einer konstanten Geschwindigkeit während mehrerer Stunden nacheinander erfolgt.

2. Verfahren zur Bildung von Kügelchen nach Anspruch 1, bei dem die Drehachse (5) des Behälters (2) im Zentrum des kreisförmigen oder im Wesentlichen kreisförmigen Querschnitts der Innenwand angeordnet ist.

3. Verfahren zur Bildung von Kügelchen nach Anspruch 1, bei dem die Drehgeschwindigkeit des Behälters zwischen 25 und 40% einer kritischen Geschwindigkeit enthalten ist, die der Drehgeschwindigkeit entspricht, ab der die Gruppe von Partikeln nicht mehr entlang der Innenwand in Bewegung versetzt wird, obwohl der Behälter sich weiterhin dreht.

4. Verfahren zur Bildung von Kügelchen nach Anspruch 1, bei dem der Behälter ein geschlossener Behälter ist.

5. Verfahren zur Bildung von Kügelchen nach Anspruch 1, bei dem die Drehachse (5) des Behälters bezüglich der Horizontalen geneigt ist.

6. Verfahren zur Bildung von Kügelchen nach Anspruch 1, bei dem das Innenvolumen des Behälters wenigstens fünf Mal größer ist als das Volumen der in den Behälter eingebrachten Gruppe von Partikeln.

7. Verfahren zur Bildung von Kügelchen nach Anspruch 1, bei dem das Innenvolumen des Behälters eine sphärische oder zylindrische Form aufweist.

8. Verfahren zur Bildung von Kügelchen nach Anspruch 1, bei dem die in den Behälter eingebrachten Partikel aus einem anorganischen Material sind.

9. Verfahren zur Bildung von Kügelchen nach Anspruch 8, bei dem das anorganische Material ein Oxid, ein Metall oder ein Karbid ist.

10. Verfahren zur Bildung von Kügelchen nach Anspruch 9, bei dem das anorganische Material ein Titanoxid, ein Siliziumoxid, ein Aluminiumoxid, ein Siliziumkarbid oder ein Titankarbid ist.

11. Verfahren zur Bildung von Kügelchen nach Anspruch 10, bei dem das anorganische Material ausgewählt ist aus Titandioxid (TiO₂), Siliziumdioxid (SiO₂), Aluminiumoxid (Al₂O₃).

## Claims

1. Method of forming micrometric or millimetric sized inorganic granules by the agglomeration of nanometric sized inorganic particles, comprising the addition of a set of nanometric sized inorganic particles (1) into a container (2) having an inside wall surface with a circular or approximately circular section and setting the set of particles in motion along said inside wall surface by rotating the container about a rotation axis (5) passing through said container (2), **characterised in that** the setting in motion of the particles is done in a dry state and the container is rotated continuously at constant speed for several consecutive hours.

2. Method of forming granules according to claim 1, wherein the rotation axis (5) of the container (2) is located at the centre of the circular or approximately circular section of the inside wall surface.

3. Method of forming granules according to claim 1, wherein the container rotation speed is between 25 and 40% of a critical speed corresponding to the rotation speed at which the set of particles is no longer made to move along the inside wall surface, although the container is still rotating.

4. Method of forming granules according to claim 1, wherein the container is a closed container.

5. Method of forming granules according to claim 1, wherein the rotation axis (5) of the container is inclined from the horizontal.

6. Method of forming granules according to claim 1, wherein the inside volume of the container is at least five times larger than the volume of the set of particles added into the container.

7. Method of forming granules according to claim 1, wherein the inside volume of the container is spherical or cylindrical in shape.

8. Method of forming granules according to claim 1, wherein particles added into the container are made of an inorganic material.

9. Method of forming granules according to claim 8, wherein the inorganic material is an oxide, a metal or a carbide.

10. Method of forming granules according to claim 9, wherein the inorganic material is a titanium oxide, a silicon oxide, an aluminium oxide, a silicon carbide or a titanium carbide.

11. Method of forming granules according to claim 10, wherein the inorganic material is chosen from among titanium dioxide (TiO₂), silicon dioxide (SiO₂) or alumina (Al₂O₃).
